# EUROPÄISCHE PATENTSCHRIFT

(11) **EP 3 649 575 B1**
(45) Veröffentlichungstag und Bekanntmachung des Hinweises auf die Patenterteilung: **22.04.2026**
(21) Anmeldenummer: 18740146.8
(22) Anmeldetag: 04.07.2018
(51) Int. Cl.: G06V 10/72

(54) **BELEUCHTEN EINER FAHRZEUGUMGEBUNG EINES KRAFTFAHRZEUGS**
ILLUMINATING THE VEHICLE SURROUNDINGS OF A MOTOR VEHICLE
ÉCLAIRAGE DE L'ENVIRONNEMENT D'UN VÉHICULE À MOTEUR

(30) Priorität: 05.07.2017 DE 102017211427
(43) Veröffentlichungstag der Anmeldung: 13.05.2020
(73) Patentinhaber: Audi AG, 85045 Ingolstadt (DE)
(72) Erfinder: NEUKAM, Johannes, 91257 Pegnitz (DE)
(74) Vertreter: Hofstetter, Schurack & Partner
(86) Internationale Anmeldenummer: PCT/EP2018/068108
(87) Internationale Veröffentlichungsnummer: WO 2019/008046

(56) Entgegenhaltungen:
- CN-A- 103 747 981
- US-A1- 2016 371 983
- US-A1- 2016 371 983
- TAMBURO ROBERT ET AL: "DMDs for smart headlights", PROCEEDINGS OF SPIE, IEEE, US, vol. 8979, 7 March 2014 (2014-03-07), pages 89790F - 89790F, XP060034751, ISBN: 978-1-62841-730-2, DOI: 10.1117/12.2053788
- TAMBURO ROBERT ET AL: "DMDs for smart headlights", PROCEEDINGS OF SPIE, IEEE, US, vol. 8979, 7 March 2014 (2014-03-07), pages 89790F - 89790F, XP060034751, ISBN: 978-1-62841-730-2, DOI: 10.1117/12.2053788
- TAMBURO ROBERT ET AL: "DMDs for smart headlights", VISUAL COMMUNICATIONS AND IMAGE PROCESSING; 20-1-2004 - 20-1-2004; SAN JOSE,, vol. 8979, 7 March 2014 (2014-03-07), pages 89790F - 89790F, XP060034751, ISBN: 978-1-62841-730-2, DOI: 10.1117/12.2053788

## Beschreibung

Die Erfindung betrifft ein Verfahren zum Beleuchten einer Fahrzeugumgebung eines Kraftfahrzeugs, bei dem ein Pixelscheinwerfer des Kraftfahrzeugs abhängig von einem eine Bildfolge repräsentierenden Steuersignal Licht abgibt, um die Fahrzeugumgebung zumindest teilweise zu beleuchten, wobei ein jeweiliges einzelnes Bild der Bildfolge einer jeweiligen aktuell durch den Pixelscheinwerfer bereitzustellenden Lichtverteilung entspricht, die beleuchtete Fahrzeugumgebung mittels einer Fahrzeugkamera erfasst wird, die entsprechende Kameradaten bereitstellt, und die Kameradaten mittels einer Auswerteeinheit unter Berücksichtigung einer vorgegebenen Lichtverteilung ausgewertet werden, um das Steuersignal zum Steuern des Pixelscheinwerfers zu ermitteln und bereitzustellen. Die Erfindung betrifft ferner eine Steuereinrichtung zum Steuern eines Pixelscheinwerfers eines Kraftfahrzeugs, mit einer Steuersignaleinheit, die ausgebildet ist, ein eine Bildfolge repräsentierendes Steuersignal für den Pixelscheinwerfer zum Beleuchten einer Fahrzeugumgebung des Kraftfahrzeugs bereitzustellen, so dass der Pixelscheinwerfer Licht abgibt, um die Fahrzeugumgebung zumindest teilweise zu beleuchten, wobei ein jeweiliges einzelnes Bild der Bildfolge einer jeweiligen aktuell durch den Pixelscheinwerfer bereitzustellenden Lichtverteilung entspricht, einer Empfangseinheit zum Empfangen von Kameradaten einer die beleuchtete Fahrzeugumgebung erfassende und die Kameradaten bereitstellende Fahrzeugkamera, und einer an die Steuersignaleinheit und die Empfangseinheit angeschlossene Auswerteeinheit zum Auswerten der Kameradaten unter Berücksichtigung einer vorgegebenen Lichtverteilung, um abhängig vom Auswerten das Steuersignal zum Steuern des Pixelscheinwerfers zu ermitteln und bereitzustellen. Schließlich betrifft die Erfindung auch ein Kraftfahrzeug mit einer Fahrzeugkamera, einem Pixelscheinwerfer und einer Steuereinrichtung zum Steuern des Pixelscheinwerfers.

Verfahren zum Beleuchten der Fahrzeugumgebung des Kraftfahrzeugs, Steuereinrichtungen zum Steuern des Pixelscheinwerfers des Kraftfahrzeugs sowie auch Kraftfahrzeuge der gattungsgemäßen Art sind im Stand der Technik umfänglich bekannt. Kraftfahrzeuge weisen Scheinwerfer, insbesondere Kraftfahrzeugscheinwerfer auf, mittels denen die Fahrzeugumgebung des Kraftfahrzeugs beleuchtet werden kann. Die Beleuchtung dient dazu, einerseits bei ungünstigen Sichtverhältnissen, insbesondere bei Dunkelheit, zum einen eine gute Sichtbarkeit des Kraftfahrzeugs für weitere Verkehrsteilnehmer zu ermöglichen, und andererseits unter anderem eine Beleuchtung des Fahrwegs beziehungsweise der Fahrbahn zu ermöglichen, um dem Fahrer des Kraftfahrzeugs ein sicheres Führen des Kraftfahrzeugs zu ermöglichen. Darüber hinaus ist die Beleuchtung, die mittels des Kraftfahrzeugs bereitzustellen ist, durch gesetzliche Vorschriften sowie Normen geregelt.

Ein Kraftfahrzeug der gattungsgemäßen Art ist ein Fahrzeug, welches mittels einer Antriebseinrichtung im bestimmungsgemäßen Fahrbetrieb angetrieben sein kann. Die Antriebseinrichtung kann eine Antriebseinrichtung sein, die eine Verbrennungskraftmaschine oder auch eine elektrische Maschine umfasst. Natürlich können auch Kombinationen hiervon vorgesehen sein. Das Kraftfahrzeug ist vorzugsweise ein Kraftwagen, insbesondere ein Personenkraftwagen.

Moderne Kraftfahrzeuge weisen Pixelscheinwerfer auf, mittels denen in hochflexibler Weise Lichtverteilungen zum Beleuchten der Fahrzeugumgebung bereitgestellt werden können. So können beispielsweise vorgegebene Lichtverteilungen erzeugt und bereitgestellt werden, die zum Beispiel die Fahrbahn, auf dem das Kraftfahrzeug geführt wird, beleuchten. Aber auch die weitere Umgebung des Kraftfahrzeugs kann mittels des Pixelscheinwerfers beleuchtet sein.

Ein Pixelscheinwerfer ist ein Scheinwerfer, der aufgrund seiner Konstruktion in hochflexibler Weise Lichtverteilungen bereitzustellen vermag. Zu diesem Zweck kann er beispielsweise basierend auf Leuchtdioden ausgebildet sein, die nach Art einer Matrix im Scheinwerfer angeordnet sind. Abhängig von der bereitzustellenden Lichtverteilung werden die Leuchtdioden mittels einer Scheinwerfersteuerung mit elektrischer Energie beaufschlagt, um entsprechend Licht zu emittieren. Darüber hinaus können auch Laserscheinwerfer als Pixelscheinwerfer vorgesehen sein, die einen Konversionsstoff aufweisen, der bei Beaufschlagung mit einem Laserlicht Konversionslicht emittiert. Durch entsprechende Beaufschlagung des Konversionsstoffs an unterschiedlichen Stellen mit gegebenenfalls unterschiedlicher Lichtstärke des Laserlichts kann eine nahezu beliebige Lichtverteilung erreicht werden. Natürlich können auch entsprechende Kombinationen von solchen Scheinwerfern vorgesehen sein.

Darüber hinaus umfassen moderne Kraftfahrzeuge Fahrzeugkameras, um ein autonomes Fahren zu ermöglichen und/oder auch Fahrerassistenzsysteme mit erforderlichen Daten zu versorgen. In Kombination mit Pixelscheinwerfern können so zum Beispiel entgegenkommende Objekte, insbesondere entgegenkommende Kraftfahrzeuge, erfasst werden und die Lichtverteilung, die mit dem Pixelscheinwerfer bereitgestellt wird, entsprechend angepasst werden, um die entsprechenden erfassten Objekte möglichst nicht zu blenden.

So offenbart beispielsweise die DE 10 2007 026 750 A1 ein Verfahren und eine Vorrichtung zum automatischen Erfassen leuchtender Objekte im Straßenverkehr. Hiermit sollen selbst leuchtende Objekte von solchen Objekten unterschieden werden, die lediglich das von dem Pixelscheinwerfer abgegebene Licht reflektieren.

Darüber hinaus offenbart die DE 10 2012 103 293 A1 ein Verfahren und eine Vorrichtung zum Betreiben eines Fahrzeugscheinwerfers. Hier soll über ein Kamerasystem ein vom Fahrzeugscheinwerfer ausgeleuchteter Umgebungsbereich des Kraftfahrzeugs automatisch erfasst und in diesem Bereich selbstleuchtende Blendlichtquellen und/oder reflektierende Blendlichtquellen und deren Eigenschaften automatisch ermittelt werden. Anhängig von einem ermittelten Gesamtadaptionsniveau von Augen des Fahrers des Kraftfahrzeugs wird eine Gesamtintensitätsverteilung bestimmt.

Ferner offenbart die DE 2014 108 239 A1 ein Verfahren zur adaptiven Steuerung eines hochauflösenden Scheinwerfersystems.

Schließlich offenbart die DE 10 2008 032 345 A1 einen Scheinwerfer für Kraftfahrzeuge, mit dem ein hoher Ausleuchtungsgrad eines Kraftfahrzeugvorfeldes ermöglicht wird, ohne dass eine Blendung weiterer Verkehrsteilnehmer gewährleistet ist. Zu diesem Zweck stellt der Scheinwerfer gepulstes Licht bereit, wobei eine Dunkelphase eines hiermit erzeugten Lichtstromsignals dazu genutzt wird, eine Helligkeit des Fahrzeugvorfeldes zu erfassen.

Ferner offenbart Robert Tamburo et al. in Visual Communications and Image Processing, Band 8979 vom 7. März 2014 auf den Seiten 89790F-1 bis 89790F-4: "DMDs for smart headlights". Darüber hinaus offenbart die CN 103 747 981 A ein Verfahren zur Bestimmung einer Fahrbahnunebenheit eines von zumindest einem Scheinwerfer eines Fahrzeugs ausgeleuchteten Fahrbahnabschnitts und Verfahren zur Steuerung einer Lichtaussendung zumindest eines Scheinwerfers eines Fahrzeugs. Schließlich offenbart die US 2016/0371983 A1 ein Parkunterstützungssystem und ein Verfahren.

Auch wenn sich der Stand der Technik bewährt hat, verbleibt dennoch Verbesserungsbedarf. So hat es sich gezeigt, dass beispielsweise Fahrbahnbereiche, die mit Eis oder Wasser bedeckt sind und infolgedessen bei Beleuchtung Licht stärker reflektieren als trockene Fahrbahnbereiche, gleichermaßen ausgeleuchtet werden, wie die trockenen Fahrbahnbereiche. Dies hat zur Folge, dass zumindest für den Fahrer des Kraftfahrzeugs eine Blendwirkung auftreten kann.

Darüber hinaus kann das Problem auftreten, dass weitere erfasste Verkehrsteilnehmer, beispielsweise entgegenkommende Kraftfahrzeuge, durch Anpassen der Lichtverteilung ausgeblendet werden, wodurch ein Erkennen von Details der weiteren Verkehrsteilnehmer erschwert wird. Solche Details können beispielsweise Defekte, ein Verhalten von Insassen, ein Erkennen, ob ein entgegenkommendes Fahrzeug auf ein Hindernis zufährt, dem es ausweichen muss, oder dergleichen sein.

Weiterhin kann das Problem auftreten, dass die Fahrzeugkamera des Kraftfahrzeugs, die Daten für beispielsweise ein autonomes Fahren zur Verfügung stellt, in einem Bereich der Erfassung geblendet und/oder in einem anderen Bereich, in dem eine schlechte Ausleuchtung ist, keine Erfassung vornimmt. Dies ist gerade für das autonome Fahren ungünstig.

Der Erfindung liegt deshalb die Aufgabe zugrunde, die Beleuchtung der Fahrzeugumgebung zu verbessern.

Als Lösung werden mit der Erfindung ein Verfahren, eine Steuereinrichtung sowie ein Kraftfahrzeug gemäß den unabhängigen Ansprüchen vorgeschlagen.

Weitere vorteilhafte Ausgestaltungen ergeben sich anhand von Merkmalen der abhängigen Ansprüche.

Bezüglich eines gattungsgemäßen Verfahrens wird insbesondere vorgeschlagen, dass die Bildfolge mit einer Bildfolgefrequenz von größer als etwa 24 Hz, vorzugsweise größer als etwa 90 Hz, besonders bevorzugt von größer als etwa 100 Hz, bereitgestellt wird, wobei die Bildfolge wenigstens ein Referenzbild zum gleichmäßigen Beleuchten der Fahrzeugumgebung umfasst, die Fahrzeugkamera zum Erfassen der Fahrzeugumgebung bezüglich des Referenzbildes synchronisiert wird und das Steuersignal abhängig von dem bezüglich des Referenzbilds erfassten Kameradaten ermittelt wird.

Bezüglich einer gattungsgemäßen Steuereinrichtung wird insbesondere vorgeschlagen, dass die Steuersignaleinheit ferner ausgebildet ist, die Bildfolge mit einer Bildfolgefrequenz von größer als etwa 24 Hz, vorzugsweise größer als etwa 90 Hz, besonders bevorzugt von größer als etwa 100 Hz, bereitzustellen, wobei die Bildfolge wenigstens ein Referenzbild zum gleichmäßigen Beleuchten der Fahrzeugumgebung umfasst, die Fahrzeugkamera zum Erfassen der Fahrzeugumgebung bezüglich des Referenzbildes zu synchronisieren und das Steuersignal abhängig von dem bezüglich des Referenzbilds erfassten Kameradaten zu ermitteln und bereitzustellen.

Kraftfahrzeugseitig wird insbesondere vorgeschlagen, dass die Steuereinrichtung gemäß der Erfindung ausgebildet ist.

Die Erfindung basiert auf dem Gedanken, dass durch eine gleichmäßige Ausleuchtung der Fahrzeugumgebung auf einem vorgebbaren Beleuchtungsniveau die Möglichkeit geschaffen werden kann, mit der Fahrzeugkamera zuverlässig die Fahrzeugumgebung zu erfassen. Dabei wird die gleichmäßige Beleuchtung derart gewählt, dass sie weitere Verkehrsteilnehmer möglichst nicht behindert. Zu diesem Zweck sieht die Erfindung vor, dass mittels eines Referenzbildes, welches in die Bildfolge eingefügt wird oder ein bestehendes Bild der Bildfolge ersetzt, für einen kurzen Moment die gleichmäßige Beleuchtung bereitgestellt wird, wobei die Zeitdauer derart gewählt wird, dass insbesondere für das menschliche Auge keine signifikante Beeinträchtigung zu erwarten ist. Dies erreicht die Erfindung dadurch, dass die Bildfolgefrequenz entsprechend hoch gewählt wird, so dass eine Trägheit bei der Erfassung von Licht genutzt werden kann, um die Störung für die weiteren Verkehrsteilnehmer, insbesondere von Personen, beispielsweise Fahrern von anderen Kraftfahrzeugen oder dergleichen, zu vermeiden beziehungsweise zu reduzieren.

Um eine Erfassung der Fahrzeugumgebung während des aktiven Referenzbildes zu ermöglichen, wird die Fahrzeugkamera entsprechend synchronisiert. Zu diesem Zweck kann vorgesehen sein, dass die Fahrzeugkamera einen eigenen Sensor aufweist, der das Referenzbild ermitteln kann. Es kann aber auch vorgesehen sein, dass ein separates Kamerasteuersignal bereitgestellt wird, mittels welchem der Fahrzeugkamera die Information übermittelt wird, wann der Pixelscheinwerfer gemäß einem Referenzbild gesteuert wird. Schließlich besteht auch die Möglichkeit, wenn die Bildfolge nach Art einer Videosequenz bereitgestellt wird, die Erfassung auf die Videosequenz zu synchronisieren, wobei durch die Synchronisierung der Erfassung auf die Videosequenz automatisch auch eine Synchronisierung bezüglich des Referenzbildes erreicht werden kann.

Die Fahrzeugkamera kann beispielsweise eine Videokamera, eine Fotokamera und/oder dergleichen sein. Vorzugsweise hat die Fahrzeugkamera eine elektronischen, insbesondere eine digitale Aufnahmeeinheit, so dass entsprechend der erfassten Fahrzeugumgebung Kameradaten bereitgestellt werden können, die vorzugsweise digitale Daten sind.

Der Pixelscheinwerfer ist ein Scheinwerfer, der eine Mehrzahl von matrixartig angeordneten einzeln beziehungsweise individuell steuerbaren Pixeln aufweist, die in geeigneter Weise angesteuert werden können, um die Lichtabgabe des Pixelscheinwerfers gemäß dem jeweils aktuellen Bild der Bildfolge entsprechend des Steuersignals einstellen zu können. Ein Pixel des Pixelscheinwerfers stellt somit vorzugsweise eine im Wesentlichen punktförmige Lichtquelle dar. Die Lichtquelle kann beispielsweise durch eine Leuchtdiode, aber auch dem Grunde nach durch eine Gasentladungslampe, eine Glühlampe und/oder dergleichen gebildet sein. Diese Lichtquellen können zu einer Matrix zusammengefasst sein, die auch eine Scheinwerfersteuerung umfassen kann, mittels der die einzelnen Lichtquellen in entsprechender Weise gemäß dem Steuersignal steuerbar sind. Der Pixelscheinwerfer kann darüber hinaus auch eine Laserlichtquelle nach Art eines Laserscanners umfassen, der entsprechend gesteuert wird, damit eine Lichtverteilung gemäß dem Steuersignal bereitgestellt werden kann. Darüber hinaus kann der Pixelscheinwerfer natürlich weitere optisch aktive Elemente umfassen, die das von den einzelnen Lichtquellen emittierte Licht des Pixelscheinwerfers in gewünschter Weise zum Abgeben von Licht gemäß der Lichtverteilung anzupassen vermögen, beispielweise refraktorische Elemente wie Linsen, Prismen und/oder dergleichen, reflektierende Elemente wie beispielsweise Spiegel, insbesondere Mikrospiegel, DMD's (Digital Mirror Device), Kombinationen hiervon und/oder dergleichen.

Die Fahrzeugumgebung erfasst zumindest einen Teil eines Bereichs um das Fahrzeug herum, der beispielsweise durch die Sichtweite für den Fahrer begrenzt sein kann. Die Fahrzeugumgebung kann jedoch auch lediglich eine Fahrbahn, auf der das Kraftfahrzeug geführt wird, einen Gehweg, der neben einer Fahrbahn angeordnet ist, einen Fahrbahnrand, Kombinationen hiervon oder dergleichen umfassen. Auch Teilbereiche der Fahrzeugumgebung können erfasst sein.

Mit dem Pixelscheinwerfer kann die Fahrzeugumgebung zumindest teilweise beleuchtet werden, vorzugsweise in einem Bereich, in dem das Kraftfahrzeug während des bestimmungsgemäßen Fahrbetriebs hineinfährt. Der Pixelscheinwerfer dient somit zur zumindest teilweisen Beleuchtung der Fahrzeugumgebung. Das Kraftfahrzeug braucht jedoch nicht nur einen einzigen Pixelscheinwerfer aufzuweisen, sondern es kann auch zwei oder noch mehr Pixelscheinwerfer aufweisen, die gemeinsam in geeigneter Weise angesteuert sein können, beispielsweise mittels des Steuersignals, welches dazu dienen kann, mehr als nur lediglich einen einzigen Pixelscheinwerfer zu steuern, oder auch mittels separater Steuersignale für jeden einzelnen von mehreren Pixelscheinwerfern. Der Pixelscheinwerfer ist vorzugsweise ein hochauflösender Scheinwerfer, der beispielsweise eine Million Pixel oder auch mehr umfassen kann.

Das Steuersignal selbst wird von einer Steuersignaleinheit bereitgestellt und ist vorzugsweise ein elektrisches Signal, welches insbesondere als digitales Signal ausgebildet ist. Das Steuersignal repräsentiert eine Bildfolge von Bildern nach Art einer Videosequenz, die dazu dienen, den Pixelscheinwerfer entsprechend zu steuern. Mit dem Pixelscheinwerfer wird ein jeweiliges Bild der Bildfolge, welches aktuell mittels des Steuersignals bereitgestellt wird, zum Steuern der Lichtquellen des Pixelscheinwerfers benutzt. Der Pixelscheinwerfer ist deshalb ausgebildet, nach Art eines Projektors, insbesondere eines Videoprojektors, Licht abzugeben.

Zumindest die beleuchtete Fahrzeugumgebung wird mittels der Fahrzeugkamera erfasst. Es kann je nach Ausgestaltung auch vorgesehen sein, dass die Fahrzeugkamera lediglich einen vorgebbaren Bereich der beleuchteten Fahrzeugumgebung erfasst. Vorzugsweise kann vorgesehen sein, dass die Fahrzeugkamera lediglich einen Ausschnitt aus dem beleuchteten Bereich erfasst, der vor dem Kraftfahrzeug in Fahrtrichtung im bestimmungsgemäßen Fahrbetrieb angeordnet ist. Es kann aber auch vorgesehen sein, dass die Fahrzeugkamera die vollständige Fahrzeugumgebung erfasst. Die Fahrzeugkamera kann als einzelne Baueinheit ausgebildet und in geeigneter Position am Kraftfahrzeug angeordnet sein. Die Fahrzeugkamera kann auch mehrteilig ausgebildet sein, so dass sie beispielsweise richtungsselektiv in unterschiedliche Richtungen die Fahrzeugumgebung erfassen kann und entsprechende Kameradaten bereitstellt.

Es ist ferner eine Auswerteeinheit vorgesehen, die die Kameradaten von der Fahrzeugkamera empfängt und unter Berücksichtigung einer vorgegebenen Lichtverteilung auswertet. Dadurch kann das Steuersignal zum Steuern des Pixelscheinwerfers ermittelt und bereitgestellt werden.

Die vorgegebene Lichtverteilung ist eine Lichtverteilung, die beispielsweise als Soll-Lichtverteilung mittels des Pixelscheinwerfers bereitgestellt werden soll. Die vorgegebene Lichtverteilung kann durch eine übergeordnete Fahrzeugsteuerung, ein Steuerelement, welches mittels manueller Betätigung durch den Fahrer des Kraftfahrzeugs betätigbar ist, und/oder dergleichen bereitgestellt werden. Beispielsweise kann die vorgegebene Lichtverteilung ein Fernlicht, ein Abblendlicht und/oder dergleichen repräsentieren.

Mittels der Auswerteeinheit können die Kameradaten ausgewertet werden und zum Beispiel entgegenkommende Fahrzeuge oder andere Verkehrsteilnehmer erfasst werden. Werden andere Verkehrsteilnehmer erfasst, kann vorgesehen sein, dass folgende Bilder der Bildfolge derart geändert werden, dass ein Raumwinkel, in dem sich der andere Verkehrsteilnehmer befindet, ausgeblendet beziehungsweise entblendet wird.

Die Bildfolge umfasst wenigstens ein Referenzbild zur gleichmäßigen Beleuchtung der Fahrzeugumgebung. Das Referenzbild führt also dazu, dass die Lichtquellen des Pixelscheinwerfers derart angesteuert werden, dass sie Licht mit der etwa gleichen Lichtstärke emittieren. Es kann vorgesehen sein, dass die Lichtquellen zum Emittieren der maximalen Lichtstärke angesteuert werden. Die Fahrzeugkamera, die bezüglich des Referenzbildes synchronisiert ist und die Fahrzeugumgebung bezüglich des Referenzbildes synchronisiert erfasst, liefert entsprechende Kameradaten an die Auswerteeinheit. Die Auswerteeinheit kann dann anhand der Kameradaten Details ermitteln, die ansonsten bei den Bildern der Bildfolge nicht erkannt werden könnten, beispielsweise, weil eine entsprechende Beleuchtung in dem jeweiligen Bereich ungenügend ist, oder ein entsprechender Bereich aufgrund von einer Übersteuerung der Fahrzeugkamera aufgrund von zu großer Lichteinwirkung nicht erfasst werden kann. Auf diese Weise ist es möglich, zum Beispiel Fahrbahnbereiche zu erkennen, die mit Eis oder Wasser bedeckt sind. Ferner können auch weitere Fahrzeugdetails von zum Beispiel entgegenkommenden oder vorausfahrenden Kraftfahrzeugen ermittelt werden. Darüber hinaus besteht natürlich die Möglichkeit, das Steuersignal durch Anpassen von auf das Referenzbild folgenden Bildern unter Berücksichtigung der durch die Auswertung gewonnenen Erkenntnisse entsprechend anzupassen. So ist es möglich, beispielsweise einen Fahrbahnbereich, der mit Eis oder Wasser bedeckt ist, geringer zu beleuchten, so dass der Fahrer des Kraftfahrzeugs oder auch weitere Verkehrsteilnehmer möglichst nicht geblendet werden.

Mit der Erfindung ist es also möglich, dass sowohl der Fahrer des Kraftfahrzeugs als auch die Fahrzeugkamera des Kraftfahrzeugs weniger stark geblendet werden. Es können darüber hinaus zusätzliche Informationen beziehungsweise Daten, zum Beispiel zur Beschaffenheit der Fahrbahn oder dergleichen, ermittelt werden. Dabei erweist es sich als vorteilhaft, dass das Referenzbild lediglich für eine sehr kurze Zeitspanne aktiviert ist, so dass der Fahrer des Kraftfahrzeugs sowie auch die weiteren Verkehrsteilnehmer im Wesentlichen nicht beeinträchtigt werden.

Die Erfindung erweist sich insbesondere für einen nachträglichen Einbau in das Kraftfahrzeug beziehungsweise den Pixelscheinwerfer als geeignet. Da gattungsgemäße Pixelscheinwerfer bereits mit einem Steuersignal nach Art einer Videosequenz angesteuert werden können, kann die Erfindung auf einfache Weise realisiert werden, ohne dass es erforderlich ist, konstruktiv in bestehende Konzepte eingreifen zu müssen. Da ein einzelnes Referenzbild vom menschlichen Auge mit den Werten von den nächsten 23 folgenden Bildern gemittelt wird, fällt den weiteren Verkehrsteilnehmern im Wesentlichen keinerlei Blendung auf. Dadurch ermöglicht es die Erfindung, dass die Fahrzeugkamera ein detailliertes Bild der Fahrzeugumgebung, insbesondere des entgegenkommenden Verkehrs, aufnehmen kann, ohne die weiteren Fahrzeugteilnehmer zu stören. Zugleich ermöglicht es die Erfindung, eine etwaige Blendung des Fahrers und der Fahrzeugkamera sowie auch gegebenenfalls weiterer Fahrzeugsensoren, beispielsweise aufgrund von Nässe und/oder Eis auf der Fahrbahn, deutlich zu reduzieren und dadurch die Fahrsicherheit insgesamt zu verbessern. Insbesondere kann die Beleuchtung der Fahrbahn aktiv so gesteuert werden, dass die Fahrzeugkamera möglichst viele Objekte erkennen und klassifizieren kann.

Es wird weiterhin vorgeschlagen, dass anhand der Kameradaten wenigstens ein über- oder unterbelichteter Bereich der beleuchteten Fahrzeugumgebung ermittelt wird. Zu diesem Zweck werden insbesondere die Kameradaten genutzt, die während des Referenzbildes mittels der Fahrzeugkamera erfasst werden.

Es wird ferner vorgeschlagen, dass die auf das Referenzbild folgenden Bilder der Bildfolge abhängig von dem wenigstens einen über- oder unterbelichteten Bereich ermittelt werden. In dieser Ausgestaltung werden also die auf das Referenzbild folgenden Bilder der Bildfolge aufgrund der Auswertung anhand der Kameradaten während des Referenzbildes entsprechend angepasst, um die Beleuchtung der Fahrzeugumgebung, insbesondere der Fahrbahn, zu verbessern. Dadurch ist es möglich, spezifische Bereiche der Fahrzeugumgebung, die sehr hell leuchten und den Fahrer beziehungsweise die Fahrzeugkamera gegebenenfalls blenden, oder auch Bereiche, in denen aufgrund mangelnder Beleuchtung die Sichtverhältnisse ungünstig sind, durch Anpassen der Bilder und infolgedessen auch Anpassen der Lichtabgabe des Pixelscheinwerfers verbessert auszuleuchten. Natürlich braucht die Erfindung nicht auf einen einzigen Bereich beschränkt zu sein, sondern es können zugleich auch mehrere über- oder unterbelichtete Bereiche ermittelt werden.

Es ist vorgesehen, dass die Bildfolge wiederholt Referenzbilder umfasst, wobei aufeinanderfolgende Referenzbilder mindestens etwa 0,5 Sekunden, vorzugsweise mindestens etwa 0,8 Sekunden, voneinander zeitlich beabstandet sind. Es hat sich nämlich gezeigt, dass bei einem derartigen Abstand der Referenzbilder zueinander eine Beeinträchtigung des Fahrers und/oder der weiteren Verkehrsteilnehmer weitgehend vermieden werden kann, wobei zugleich eine zuverlässige Funktionalität gemäß der Erfindung gewährleistet werden kann. Alternativ oder ergänzend kann auch vorgesehen sein, dass der Abstand der Referenzbilder zeitlich zueinander von einer Fahrzeuggeschwindigkeit des Kraftfahrzeugs abhängig ist. So kann vorgesehen sein, dass die Referenzbilder bei einer hohen Fahrzeuggeschwindigkeit mit einem geringen Abstand zeitlich zueinander folgen, wohingegen bei einer niedrigen Fahrzeuggeschwindigkeit, beispielsweise beim Rangieren oder dergleichen, der zeitliche Abstand zueinander vergrößert sein kann. Darüber hinaus können natürlich auch weitere Fahrzeugparameter berücksichtigt werden, um den zeitlichen Abstand der aufeinanderfolgenden Referenzbilder einstellen zu können. Die Referenzbilder brauchen nicht zeitlich äquidistant aufeinander zu folgen, sondern es kann darüber hinaus vorgesehen sein, dass der zeitliche Abstand der Referenzbilder zueinander variiert.

Es wird ferner vorgeschlagen, dass das Referenzbild mittels eines den Pixelscheinwerfer steuernden Referenzsteuersignals bereitgestellt wird. In dieser Ausgestaltung ist ein separates Steuersignal, nämlich das Referenzsteuersignal, zum Bereitstellen des Referenzbildes vorgesehen. Es braucht daher nicht in eine bestehende Bildfolge eingegriffen zu werden. Zu diesem Zweck kann vorgesehen sein, dass der Pixelscheinwerfer einen separaten Eingangsanschluss aufweist, an dem das Referenzsteuersignal zugeführt werden kann. Es kann aber auch vorgesehen sein, dass das Referenzsteuersignal der Steuersignaleinheit zugeführt wird, die dann in die Bildfolge ein entsprechendes Referenzbild einfügt oder ein vorhandenes Bild durch das Referenzbild ersetzt. In vergleichbarer Weise kann diese Funktion natürlich auch beim Pixelscheinwerfer selbst vorgesehen sein.

Vorzugsweise wird das Referenzbild mittels des Pixelscheinwerfers für eine Zeitdauer von weniger als etwa 0,033 Sekunden, vorzugsweise von weniger als etwa 0,01 Sekunden, bereitgestellt. Bei einer derartigen Zeitdauer kann einerseits mittels der Fahrzeugkamera die Fahrzeugumgebung bezüglich des Referenzbildes zuverlässig erfasst werden und andererseits eine ungünstige Wirkung auf weitere Verkehrsteilnehmer oder auch auf den Fahrer des Kraftfahrzeugs weitgehend vermieden werden.

Vorzugsweise beleuchtet der Pixelscheinwerfer eine Fahrbahn als Fahrzeugumgebung. Der Pixelscheinwerfer ist deshalb beispielsweise ein Frontscheinwerfer des Kraftfahrzeugs. Er kann aber auch ein Rückfahrscheinwerfer oder ein Zusatzscheinwerfer oder dergleichen sein.

Ferner wird vorgeschlagen, dass mittels der Fahrzeugkamera Sichtverhältnisse ermittelt werden und das Verfahren abhängig von den ermittelten Sichtverhältnissen durchgeführt wird. Auf diese Weise ist es möglich, die Verfahrensführung optimiert einzusetzen, nämlich insbesondere dann, wenn ungünstige Lichtverhältnisse vorliegen und die Sicht, insbesondere in Bezug für den Fahrer des Kraftfahrzeugs oder auch weitere Verkehrsteilnehmer behindert ist. Beispielsweise kann vorgesehen sein, dass mit der Fahrzeugkamera eine Umgebungshelligkeit oder auch Niederschläge erfasst werden, woraufhin dann die entsprechende Verfahrensführung aktiviert wird. Entsprechend kann die Verfahrensführung auch wieder deaktiviert werden, wenn mittels der Fahrzeugkamera eine Verbesserung der Sichtverhältnisse ermittelt worden ist oder die entsprechenden Voraussetzungen, die die Verfahrensführung gemäß der Erfindung aktiviert haben, entfallen sind.

Die für das erfindungsgemäße Verfahren angegebenen Wirkungen und Vorteile gelten gleichermaßen für die erfindungsgemäße Steuereinrichtung sowie das mit der erfindungsgemäßen Steuereinrichtung ausgerüstete Kraftfahrzeug und umgekehrt. Insbesondere können deshalb Verfahrensmerkmalen auch entsprechende Vorrichtungsmerkmale zugeordnet werden und als solche formuliert sein und umgekehrt.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: schematisch eine erste Ausgestaltung eines Pixelscheinwerfers;
- Fig. 2: schematisch eine zweite Ausgestaltung eines Pixelscheinwerfers;
- Fig. 3: eine schematische Darstellung einer Lichtabgabe bei Ansteuerung des Pixelscheinwerfers nach Fig. 1 oder 2 mit einem Referenzbild;
- Fig. 4: eine schematische Darstellung einer Lichtabgabe bei Ansteuerung des Pixelscheinwerfers nach Fig. 1 oder 2 mit einem Bild einer Bildfolge; und
- Fig. 5: eine schematische Darstellung eines Ausschnitts einer Bildfolge zum Ansteuern des Pixelscheinwerfers nach Fig. 1 oder 2.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

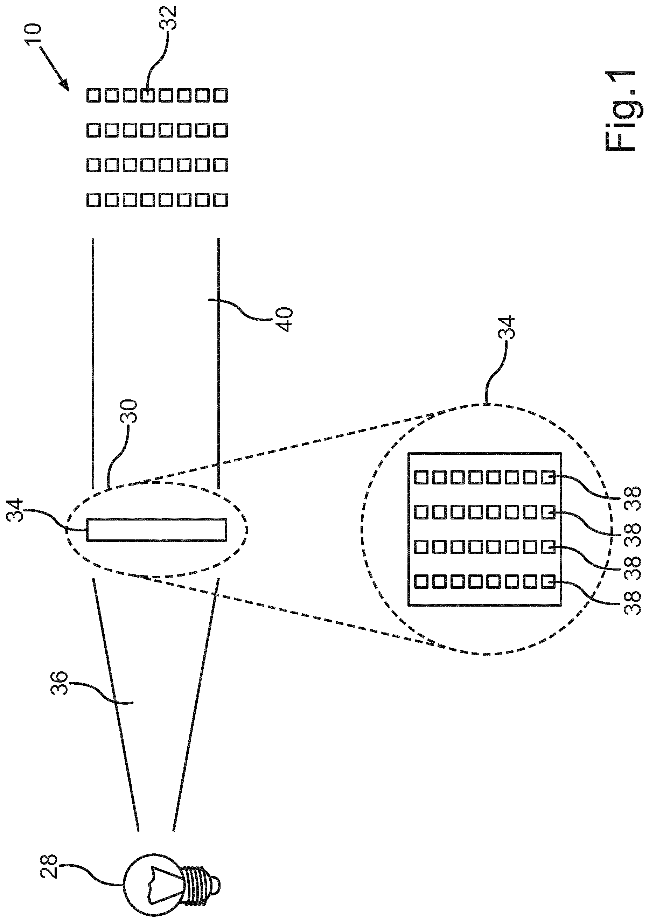

Fig. 1 zeigt in einer schematischen Darstellung eine erste Ausgestaltung für einen Pixelscheinwerfer 10, mittels dem das Verfahren der Erfindung ausgeführt werden kann. Der Pixelscheinwerfer 10 umfasst eine Lichtquelle 28, die vorliegend zum Beispiel durch eine Gasentladungslampe gebildet sein kann. Alternativ können hier natürlich auch eine Laserlichtquelle, eine entsprechend leuchtstarke Leuchtdiode, eine Glühlampe oder dergleichen vorgesehen sein. Die Lichtquelle 28 emittiert Licht 36, welches einer Matrix 34 zugeführt wird. Die Matrix 34 besitzt einzelne Elemente 38, welche individuell auf transparent oder intransparent geschaltet werden können. Dadurch werden die einzelnen Pixel des Pixelscheinwerfers 10 bereitgestellt. In einer unteren vergrößerten Darstellung ist eine schematische Draufsicht auf die Matrix 34 dargestellt, in denen die einzelnen Elemente 38 erkennbar sind. Abhängig von einer jeweiligen Ansteuerung des Pixelscheinwerfers 10 mittels eines Steuersignals werden die entsprechenden Elemente 38 auf transparent beziehungsweise auf intransparent geschaltet, so dass ein entsprechendes Lichtmuster beziehungsweise eine Lichtverteilung bereitgestellt wird, gemäß der Licht 40 abgegeben wird. Mit 32 ist eine Lichtabgabe des Lichts 40 dargestellt, die bereitgestellt wird, wenn sämtliche Elemente 38 der Matrix 34 auf transparent geschaltet sind.

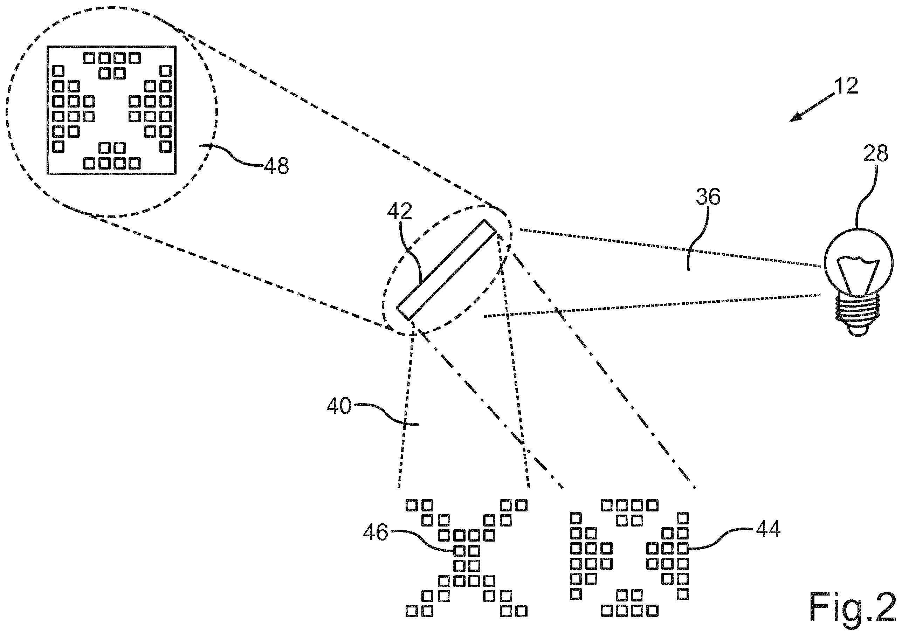

Fig. 2 zeigt eine zweite Ausgestaltung für einen Pixelscheinwerfer 12, mittels dem die Erfindung realisiert werden kann. Der Pixelscheinwerfer 12 weist wie der Pixelscheinwerfer 10 gemäß Fig. 1 die Lichtquelle 28 auf, die Licht 36 emittiert. Das Licht 36 wird hier einer Spiegelmatrix 42 zugeführt, die in Einzelteile untergliedert ist, die individuell angesteuert werden können. Je nach Ansteuerung wird das Licht 36 in eine der individuellen Ansteuerung entsprechende Richtung abgelenkt. Mittels der Spiegelmatrix 42 werden somit die einzelnen Pixel des Pixelscheinwerfers 12 bereitgestellt. Mit 48 ist eine aktuelle Einstellung der Spiegelmatrix 42 vergrößert dargestellt. Diese Einstellung der Spiegelmatrix 42 führt dazu, dass von der Spiegelmatrix 42 das Licht 36 teilweise reflektiert wird und als Licht 40 abgegeben wird, welches eine Lichtverteilung gemäß der Darstellung 48 aufweist. Mittels der übrigen Elemente der Spiegelmatrix 42 wird das Licht 36 in eine Lichtfalle 44 abgelenkt. Der Pixelscheinwerfer 12 gibt somit eine Lichtverteilung gemäß dem abgegebenen Licht 40 ab.

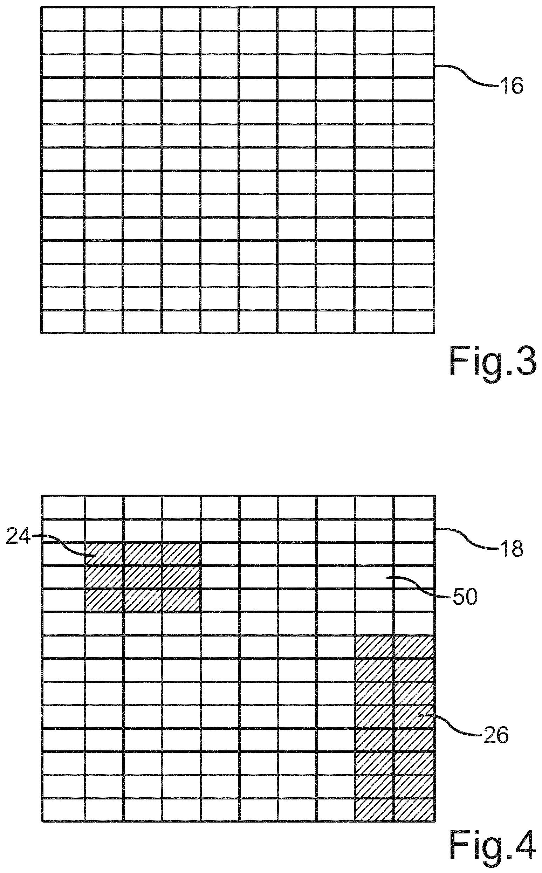

Die Fig. 3 bis 5 zeigen im Folgenden ein Verfahren zum Beleuchten einer Fahrzeugumgebung eines Kraftfahrzeugs, bei dem der Pixelscheinwerfer 10, 12 des Kraftfahrzeugs, welches in den Fign. nicht dargestellt ist, abhängig von einem eine Bildfolge 14 repräsentierenden Steuersignal Licht 40 abgibt, um die Fahrzeugumgebung zumindest teilweise zu beleuchten.

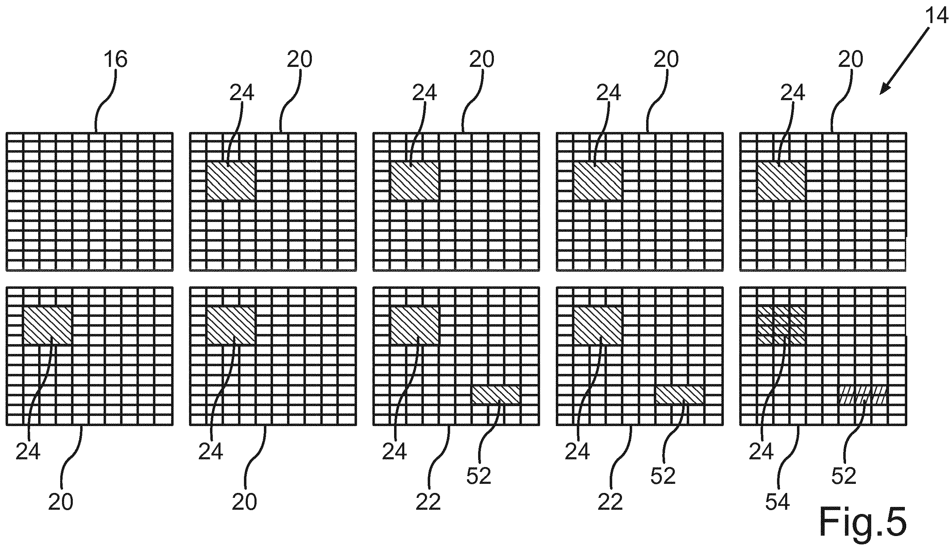

Ein jeweiliges einzelnes Bild 20, 22 (Fig. 5) einer Bildfolge 14 entspricht einer jeweiligen aktuell durch den Pixelscheinwerfer 10, 12 bereitzustellenden Lichtverteilung. Die beleuchtete Fahrzeugumgebung wird mittels einer nicht dargestellten Fahrzeugkamera erfasst, die entsprechende Kameradaten 18 (Fig. 4) bereitstellt. In Fig. 4 ist eine Auswertung der Kameradaten 18 dargestellt, wonach die Kameradaten 18 einen Bereich 24 erfassen, bei dem eine Beleuchtung zu groß ist, so dass eine Blendung auftreten kann. Ferner ergibt sich aus den Kameradaten 18, dass ein Bereich 26 ermittelt wurde, bei dem eine Beleuchtung unzureichend ist. So können Kontraste in den Bereichen 24, 26 nicht hinreichend erkannt werden. In einem übrigen Bereich 50 ist eine normale Ausleuchtung in einem zulässigen Bereich erfasst worden.

Die Kameradaten 18 werden mittels einer ebenfalls nicht dargestellten Auswerteeinheit unter Berücksichtigung einer vorgegebenen Lichtverteilung, hier ein Fernlicht, ausgewertet, um das Steuersignal zum Steuern des Pixelscheinwerfers 10, 12 zu ermitteln und bereitzustellen.

Die Bildfolge 14 (Fig. 5) wird mit einer Bildfolgefrequenz von vorliegend etwa 100 Hz bereitgestellt. Die Bildfolge 14 umfasst ein Referenzbild 16 (Fig. 3), welches zum gleichmäßigen Beleuchten der Fahrzeugumgebung dient. Vorliegend ist vorgesehen, dass sämtliche Pixel des Pixelscheinwerfers 10, 12 maximale Helligkeit abgeben.

Die Fahrzeugkamera erfasst die Fahrzeugumgebung bezüglich des Referenzbildes 16, indem sie entsprechend synchronisiert wird. Das Ansteuern des Pixelscheinwerfers 10, 12 mittels des Referenzbildes 16 führt dazu, dass die Fahrzeugkamera während des Darstellens des Referenzbildes 16 mittels des Pixelscheinwerfers 10, 12 die Kameradaten 18 erfasst. Die Kameradaten 18 entsprechen somit einer Aufnahme während das Referenzbild 16 mittels des Pixelscheinwerfers 10, 12 dargestellt wird. Die Kameradaten 18 sind beispielsweise anhand von Fig. 4 dargestellt.

Das Steuersignal wird nun mittels der Auswerteeinheit abhängig von den bezüglich des Referenzbilds 16 erfassten Kameradaten 18 ermittelt.

Fig. 5 zeigt eine Videosequenz beziehungsweise die Bildfolge 14, die das Steuersignal repräsentiert, um den Pixelscheinwerfer 10, 12 ansteuern zu können. Die Reihenfolge der einzelnen Bilder ist zeitlich von links nach rechts und von oben nach unten.

Ein erstes Bild ist durch das Referenzbild 16 gebildet. Während dieses Referenzbild 16 zur Steuerung des Pixelscheinwerfers 10, 12 dient, erfasst die Fahrzeugkamera die Fahrzeugumgebung und liefert Kameradaten 18 (Fig. 4). Aufgrund der Kameradaten 18 werden die folgenden Bilder 20 ermittelt, bei denen der Bereich 24 hinsichtlich der Lichtstärke reduziert ist, um ein entgegenkommendes Objekt zu entblenden beziehungsweise auszublenden. Die sechs Bilder 20, die unmittelbar aufeinanderfolgen, steuern somit für die weiteren sechs Zyklen beziehungsweise Frames den Pixelscheinwerfer 10, 12 hinsichtlich der Lichtabgabe.

Durch weitere Auswertung der Kameradaten 18, insbesondere unter Berücksichtigung des Bereichs 26 (Fig. 4) werden Bereiche 52 ebenfalls ausgeblendet beziehungsweise entblendet, in denen eine verminderte Beleuchtung gewünscht ist, um ein Blenden aufgrund von Eis beziehungsweise Wasser zu reduzieren. Dies wird mit den auf die Bilder 20 folgenden Bildern 22 erreicht. Ein darauffolgendes Bild 54 zeigt, dass die Ausblendung in den Bereichen 24, 52 reduziert ist. In diesen Bereichen werden die Pixel somit wieder zur teilweisen Lichtabgabe angesteuert.

Der in Fig. 5 dargestellte Ausschnitt der Bildfolge 14 zeigt die prinzipielle Verfahrensführung. In der vorliegenden Ausgestaltung ist vorgesehen, dass pro Sekunde 100 Bilder 16, 20, 22, 52 aufeinanderfolgend als Steuersignal bereitgestellt werden. Je nach Bedarf können ergänzende Referenzbilder 16 in der Bildfolge 14 vorgesehen sein. In der vorliegenden Ausgestaltung ist vorgesehen, dass jedes dreißigste Bild ein Referenzbild 16 ist. Natürlich kann die Bildrate oder der zeitliche Abstand der Referenzbilder 16 auch bedarfsgerecht variiert sein, um die Verfahrensführung in geeigneter Weise an aktuelle Anforderungen anpassen zu können.

Insgesamt zeigen die Ausführungsbeispiele, wie durch die Erfindung eine verbesserte Beleuchtung der Fahrzeugumgebung, insbesondere der Fahrbahn, auf der das Kraftfahrzeug geführt wird, erreicht werden kann.

Die Ausführungsbeispiele dienen lediglich der Erläuterung der Erfindung und sollen diese nicht beschränken.

## Patentansprüche

1. Verfahren zum Beleuchten einer Fahrzeugumgebung eines Kraftfahrzeugs, bei dem:
- ein Pixelscheinwerfer (10, 12) des Kraftfahrzeugs abhängig von einem eine Bildfolge (14) repräsentierenden Steuersignal Licht (40) abgibt, um die Fahrzeugumgebung zumindest teilweise zu beleuchten, wobei ein jeweiliges einzelnes Bild (20, 22) der Bildfolge (14) einer jeweiligen aktuell durch den Pixelscheinwerfer (10, 12) bereitzustellenden Lichtverteilung entspricht, zu welchem Zweck der Pixelscheinwerfer ausgebildet ist, nach Art eines Projektors Licht abzugeben, wobei das Steuersignal selbst von einer Steuersignaleinheit bereitgestellt wird, wobei das Steuersignal die Bildfolge (14) von Bildern (20, 22) nach Art einer Videosequenz repräsentiert, die dazu dienen, den Pixelscheinwerfer entsprechend zu steuern, wobei mit dem Pixelscheinwerfer ein jeweiliges Bild (20, 22) der Bildfolge (14), welches aktuell mittels des Steuersignals bereitgestellt wird, zum Steuern von Lichtquellen des Pixelscheinwerfers benutzt wird,
- die beleuchtete Fahrzeugumgebung mittels einer Fahrzeugkamera erfasst wird, die entsprechende Kameradaten (18) bereitstellt, und
- die Kameradaten (18) mittels einer Auswerteeinheit unter Berücksichtigung einer vorgegebenen Lichtverteilung ausgewertet werden, um das Steuersignal zum Steuern des Pixelscheinwerfers (10, 12) zu ermitteln und bereitzustellen,
- die Bildfolge (14) mit einer Bildfolgefrequenz von größer als 24 Hz bereitgestellt wird, wobei die Bildfolge (14) wenigstens ein Referenzbild (16) zum gleichmäßigen Beleuchten der Fahrzeugumgebung umfasst, sodass durch eine gleichmäßige Ausleuchtung der Fahrzeugumgebung auf einem vorgebbaren Beleuchtungsniveau die Möglichkeit geschaffen wird, den Fahrweg mit der Fahrzeugkamera zuverlässig zu erfassen, wobei das Referenzbild (16) in die Bildfolge (14) eingefügt wird oder ein bestehendes Bild der Bildfolge (14) ersetzt, sodass mittels des Referenzbilds (16) für einen kurzen Moment die gleichmäßige Beleuchtung bereitgestellt wird, wobei die Bildfolge (14) wiederholt Referenzbilder (16) umfasst, wobei aufeinanderfolgende Referenzbilder (16) mindestens 0,5 s voneinander zeitlich beabstandet sind, wobei das Referenzbild (16) dazu führt, dass die Lichtquellen des Pixelscheinwerfers derart angesteuert werden, dass sie Licht mit der gleichen Lichtstärke emittieren, damit die Fahrzeugumgebung auf einem vorgebbaren Beleuchtungsniveau gleichmäßig ausgeleuchtet wird,
- die Fahrzeugkamera zum Erfassen der Fahrzeugumgebung bezüglich des Referenzbildes (16) synchronisiert wird, und
- das Steuersignal abhängig von den bezüglich des Referenzbilds (16) erfassten Kameradaten (18) ermittelt wird.

2. Verfahren nach Anspruch 1,
**dadurch gekennzeichnet, dass**
anhand der Kameradaten (18) wenigstens ein über- oder unterbelichteter Bereich (24, 26) der beleuchteten Fahrzeugumgebung ermittelt wird.

3. Verfahren nach Anspruch 2,
**dadurch gekennzeichnet, dass**
die auf das Referenzbild (16) folgenden Bilder (22) der Bildfolge (14) abhängig von dem wenigstens einen über- oder unterbelichteten Bereich (24, 26) ermittelt werden.

4. Verfahren nach einem der vorhergehenden Ansprüche,
**dadurch gekennzeichnet, dass**
das Referenzbild (16) mittels eines den Pixelscheinwerfer (10, 12) steuernden Referenzsteuersignals bereitgestellt wird.

5. Verfahren nach einem der vorhergehenden Ansprüche,
**dadurch gekennzeichnet, dass**
das Referenzbild (16) mittels des Pixelscheinwerfers (10, 12) für eine Zeitdauer von weniger als 0,033 s bereitgestellt wird.

6. Verfahren nach einem der vorhergehenden Ansprüche,
**dadurch gekennzeichnet, dass**
der Pixelscheinwerfer (10, 12) eine Fahrbahn als Fahrzeugumgebung beleuchtet.

7. Verfahren nach einem der vorhergehenden Ansprüche,
**dadurch gekennzeichnet, dass**
mittels der Fahrzeugkamera Sichtverhältnisse ermittelt werden und das Verfahren abhängig von den ermittelten Sichtverhältnissen durchgeführt wird.

8. Steuereinrichtung zum Steuern eines Pixelscheinwerfers (10, 12) eines Kraftfahrzeugs, mit:
- einer Steuersignaleinheit, die ausgebildet ist, ein eine Bildfolge (14) repräsentierendes Steuersignal für den Pixelscheinwerfer (10, 12) zum Beleuchten einer Fahrzeugumgebung des Kraftfahrzeugs bereitzustellen, sodass der Pixelscheinwerfer (10, 12) Licht (40) abgibt, um die Fahrzeugumgebung zumindest teilweise zu beleuchten, zu welchem Zweck der Pixelscheinwerfer ausgebildet ist, nach Art eines Projektors Licht abzugeben, wobei das Steuersignal die Bildfolge (14) von Bildern (20, 22) nach Art einer Videosequenz repräsentiert, die dazu dienen, den Pixelscheinwerfer entsprechend zu steuern, wobei mit dem Pixelscheinwerfer ein jeweiliges Bild (20, 22) der Bildfolge (14), welches aktuell mittels des Steuersignals bereitgestellt wird, zum Steuern von Lichtquellen des Pixelscheinwerfers benutzt wird, wobei ein jeweiliges einzelnes Bild (20, 22) der Bildfolge (14) einer jeweiligen aktuell durch den Pixelscheinwerfer (10, 12) bereitzustellenden Lichtverteilung entspricht,
- einer Empfangseinheit zum Empfangen von Kameradaten (18) einer die beleuchtete Fahrzeugumgebung erfassende und die Kameradaten bereitstellende Fahrzeugkamera, und
- einer an die Steuersignaleinheit und die Empfangseinheit angeschlossene Auswerteeinheit zum Auswerten der Kameradaten (18) unter Berücksichtigung einer vorgegebenen Lichtverteilung, um abhängig vom Auswerten das Steuersignal zum Steuern des Pixelscheinwerfers (10, 12) zu ermitteln und bereitzustellen,
wobei die Steuersignaleinheit ferner ausgebildet ist,
- die Bildfolge (14) mit einer Bildfolgefrequenz von größer als 24 Hz bereitzustellen, wobei die Bildfolge (14) wenigstens ein Referenzbild (16) zum gleichmäßigen Beleuchten der Fahrzeugumgebung umfasst, um die Fahrzeugumgebung auf einem vorgebbaren Beleuchtungsniveau gleichmäßig auszuleuchten, sodass durch eine gleichmäßige Ausleuchtung der Fahrzeugumgebung auf einem vorgebbaren Beleuchtungsniveau die Möglichkeit geschaffen wird, den Fahrweg mit der Fahrzeugkamera zuverlässig zu erfassen, wobei das Referenzbild (16) in die Bildfolge (14) eingefügt wird oder ein bestehendes Bild der Bildfolge (14) ersetzt, sodass mittels des Referenzbilds (16) für einen kurzen Moment die gleichmäßige Beleuchtung bereitgestellt wird, wobei die Bildfolge (14) wiederholt Referenzbilder (16) umfasst, wobei aufeinanderfolgende Referenzbilder (16) mindestens 0,5 s voneinander zeitlich beabstandet sind,
- die Fahrzeugkamera zum Erfassen der Fahrzeugumgebung bezüglich des Referenzbildes (16) zu synchronisieren, und
- das Steuersignal abhängig von den bezüglich des Referenzbilds (16) erfassten Kameradaten (18) zu ermitteln und bereitzustellen.

9. Kraftfahrzeug mit einer Fahrzeugkamera, einem Pixelscheinwerfer (10, 12) und einer Steuereinrichtung zum Steuern eines Pixelscheinwerfers (10, 12),
**dadurch gekennzeichnet, dass**
die Steuereinrichtung nach Anspruch 8 ausgebildet ist.

## Claims

1. A method for illuminating the vehicle surroundings of a motor vehicle, in which:
- a pixel headlight (10, 12) of the motor vehicle emits light (40) as a function of a control signal that represents an image sequence (14) in order to at least partially illuminate the vehicle surroundings, wherein a respective individual image (20, 22) of the image sequence (14) corresponds to a respective light distribution being provided at that time by the pixel headlight (10, 12), for which purpose the pixel headlight is designed to emit light in the manner of a projector, wherein the control signal itself is provided by a control signal unit, wherein the control signal represents the image sequence (14) of images (20, 22) in the manner of a video sequence that is used to appropriately control the pixel headlight, wherein by use of the pixel headlight a particular image (20, 22) of the image sequence (14), which is provided at that time by means of the control signal, is used to control light sources of the pixel headlight,
- the illuminated vehicle surroundings are detected by means of a vehicle camera which provides corresponding camera data (18), and
- the camera data (18) are evaluated by means of an evaluation unit, taking into account a predetermined light distribution, in order to determine and provide the control signal for controlling the pixel headlight (10, 12),
- the image sequence (14) is provided at an image sequence frequency of greater than 24 Hz, wherein the image sequence (14) includes at least one reference image (16) for uniformly illuminating the vehicle surroundings, so that due to uniformly illuminating the vehicle surroundings to a predefinable illumination level, the option is provided for reliably detecting the travel path using the vehicle camera, wherein the reference image (16) is inserted into the image sequence (14) or replaces an existing image of the image sequence (14) so that the uniform illumination is briefly provided by means of the reference image (16), wherein the image sequence (14) repeatedly incorporates reference images (16), wherein successive reference images (16) are spaced at least 0.5 s apart from one another in time, wherein as a result of the reference image (16), the light sources of the pixel headlight are activated in such a way that they emit light with the same light intensity, so that the vehicle surroundings are uniformly illuminated to a predefinable illumination level,
- the vehicle camera for detecting the vehicle surroundings is synchronized with respect to the reference image (16), and
- the control signal is determined as a function of the camera data (18) detected with respect to the reference image (16).

2. The method according to claim 1,
**characterized in that**
at least one overexposed or underexposed area (24, 26) of the illuminated vehicle surroundings is determined based on the camera data (18).

3. The method according to claim 2,
**characterized in that**
the images (22) of the image sequence (14) following the reference image (16) are determined based on the at least one overexposed or underexposed area (24, 26).

4. The method according to one of the preceding claims,
**characterized in that**
the reference image (16) is provided by means of a reference control signal that controls the pixel headlight (10, 12).

5. The method according to one of the preceding claims,
**characterized in that**
the reference image (16) is provided by means of the pixel headlight (10, 12) for a period of less than 0.033 s.

6. The method according to one of the preceding claims,
**characterized in that**
the pixel headlight (10, 12) illuminates a roadway as the vehicle surroundings.

7. The method according to one of the preceding claims,
**characterized in that**
visibility conditions are determined by means of the vehicle camera, and the method is carried out based on the determined visibility conditions.

8. A control device for controlling a pixel headlight (10, 12) of a motor vehicle, comprising:
- a control signal unit that is designed to provide a control signal that represents an image sequence (14) for the pixel headlight (10, 12) for illuminating the vehicle surroundings of the motor vehicle, so that the pixel headlight (10, 12) emits light (40) in order to at least partially illuminate the vehicle surroundings, for which purpose the pixel headlight is designed to emit light in the manner of a projector, wherein the control signal represents the image sequence (14) of images (20, 22) in the manner of a video sequence that is used to appropriately control the pixel headlight, wherein by use of the pixel headlight a particular image (20, 22) of the image sequence (14), which is provided at that time by means of the control signal, is used to control light sources of the pixel headlight, wherein a respective individual image (20, 22) of the image sequence (14) corresponds to a respective light distribution being provided at that time by the pixel headlight (10, 12),
- a receiving unit for receiving camera data (18) of a vehicle camera that detects the illuminated vehicle surroundings and provides the camera data, and
- an evaluation unit, connected to the control signal unit and the receiving unit, for evaluating the camera data (18), taking into account a predefined light distribution, in order to determine and provide, based on the evaluation, the control signal for controlling the pixel headlight (10, 12).
wherein the control signal unit is further designed
- to provide the image sequence (14) at an image sequence frequency of greater than 24 Hz, wherein the image sequence (14) includes at least one reference image (16) for uniformly illuminating the vehicle surroundings in order to uniformly illuminate the vehicle surroundings to a predefinable illumination level, so that due to uniformly illuminating the vehicle surroundings to a predefinable illumination level, the option is provided for reliably detecting the travel path using the vehicle camera, wherein the reference image (16) is inserted into the image sequence (14) or replaces an existing image of the image sequence (14) so that the uniform illumination is briefly provided by means of the reference image (16), wherein the image sequence (14) repeatedly incorporates reference images (16), wherein successive reference images (16) are spaced at least 0.5 s apart from one another in time,
- to synchronize the vehicle camera for detecting the vehicle surroundings with respect to the reference image (16), and
- to determine and provide the control signal based on the camera data (18) detected with respect to the reference image (16).

9. A motor vehicle having a vehicle camera, a pixel headlight (10, 12), and a control device for controlling a pixel headlight (10, 12),
**characterized in that**
the control device is designed according to claim 8.

## Revendications

1. Procédé d'éclairage de l'environnement d'un véhicule automobile, dans lequel :
- un projecteur à pixels (10, 12) du véhicule automobile émet de la lumière (40) en fonction d'un signal de commande représentant une séquence d'images (14), afin d'éclairer au moins partiellement l'environnement du véhicule, une image individuelle respective (20, 22) de la séquence d'images (14) correspondant à une répartition lumineuse respective à fournir actuellement par le projecteur à pixels (10, 12), le projecteur à pixels étant configuré, à cette fin, pour émettre de la lumière à la manière d'un projecteur, le signal de commande étant fourni par une unité de génération de signal de commande, le signal de commande représentant la séquence d'images (14) d'images (20, 22) à la manière d'une séquence vidéo servant à commander le projecteur à pixels, une image respective (20, 22) de la séquence d'images (14) fournie au moyen du signal de commande étant utilisée pour commander des sources lumineuses du projecteur à pixels,
- l'environnement éclairé du véhicule est détecté au moyen d'une caméra embarquée fournissant des données de caméra (18), et
- les données de caméra (18) sont évaluées au moyen d'une unité d'évaluation en tenant compte d'une répartition lumineuse prédéfinie afin de déterminer et de fournir le signal de commande pour commander le projecteur à pixels (10, 12),
- la séquence d'images (14) est fournie avec une fréquence de séquence d'images supérieure à 24 Hz, la séquence d'images (14) comprenant au moins une image de référence (16) destinée à éclairer de manière uniforme l'environnement du véhicule, de sorte qu'un éclairage uniforme de l'environnement du véhicule à un niveau d'éclairage prédéterminé permette de détecter de manière fiable la trajectoire au moyen de la caméra du véhicule, l'image de référence (16) étant insérée dans la séquence d'images (14) ou remplaçant une image existante de la séquence d'images (14), de manière à fournir, sorte pendant un court instant, un éclairage uniforme, la séquence d'images (14) comprenant de manière répétée des images de référence (16), des images de référence successives (16) étant espacées d'au moins 0,5 s les unes des autres, l'image de référence (16) entraînant la commande des sources lumineuses du projecteur à pixels de manière à ce qu'elles émettent une lumière de même intensité, afin que l'environnement du véhicule soit éclairé de manière uniforme à un niveau d'éclairage prédéfinissable,
- la caméra du véhicule est synchronisée pour détecter l'environnement du véhicule par rapport à l'image de référence (16), et
- le signal de commande est déterminé en fonction des données de caméra (18) détectées par rapport à l'image de référence (16).

2. Procédé selon la revendication 1,
**caractérisé en ce que**,
à partir des données de caméra (18), au moins une zone surexposée ou sous-exposée (24, 26) de l'environnement éclairé du véhicule est déterminée.

3. Procédé selon la revendication 2,
**caractérisé en ce que**
les images (22) de la séquence d'images (14) suivant l'image de référence (16) sont déterminées en fonction de la au moins une zone surexposée ou sous-exposée (24, 26).

4. Procédé selon l'une des revendications précédentes,
**caractérisé en ce que**
l'image de référence (16) est fournie au moyen d'un signal de commande de référence commandant le projecteur à pixels (10, 12).

5. Procédé selon l'une des revendications précédentes,
**caractérisé en ce que**
l'image de référence (16) est fournie au moyen du projecteur à pixels (10, 12) pendant une durée inférieure à 0,033 s.

6. Procédé selon l'une des revendications précédentes,
**caractérisé en ce que**
le projecteur à pixels (10, 12) éclaire une chaussée constituant l'environnement du véhicule.

7. Procédé selon l'une des revendications précédentes,
**caractérisé en ce que**
les conditions de visibilité sont déterminées au moyen de la caméra du véhicule et le procédé est exécuté en fonction des conditions de visibilité déterminées.

8. Dispositif de commande destiné à commander un projecteur à pixels (10, 12) d'un véhicule automobile, comprenant :
- une unité de génération de signal de commande configurée pour fournir un signal de commande représentant une séquence d'images (14) pour le projecteur à pixels (10, 12) afin d'éclairer au moins partiellement un environnement du véhicule automobile, le projecteur à pixels (10, 12) étant configuré pour émettre de la lumière (40) à la manière d'un projecteur, le signal de commande représentant la séquence d'images (14) d'images (20, 22) à la manière d'une séquence vidéo servant à commander le projecteur à pixels, une image respective (20, 22) de la séquence d'images (14) fournie au moyen du signal de commande étant utilisée pour commander des sources lumineuses du projecteur à pixels, une image individuelle respective (20, 22) de la séquence d'images (14) correspondant à une répartition lumineuse respective à fournir actuellement par le projecteur à pixels (10, 12),
- une unité de réception destinée à recevoir des données de caméra (18) provenant d'une caméra du véhicule détectant l'environnement éclairé du véhicule et fournissant les données de caméra, et
- une unité d'évaluation reliée à l'unité de génération de signal de commande et à l'unité de réception pour évaluer les données de caméra (18) en tenant compte d'une répartition lumineuse prédéfinie afin de déterminer et de fournir, en fonction de l'évaluation, le signal de commande pour commander le projecteur à pixels (10, 12),
l'unité de génération de signal de commande étant en outre configurée :
- pour fournir la séquence d'images (14) avec une fréquence de séquence d'images supérieure à 24 Hz, la séquence d'images (14) comprenant au moins une image de référence (16) destinée à éclairer uniformément l'environnement du véhicule à un niveau d'éclairage prédéterminé, de sorte qu'un éclairage uniforme de l'environnement du véhicule à un niveau d'éclairage prédéterminé permette de détecter de manière fiable la trajectoire au moyen de la caméra du véhicule, l'image de référence (16) étant insérée dans la séquence d'images (14) ou remplaçant une image existante de la séquence d'images (14), la séquence d'images (14) comprenant de manière répétée des images de référence (16), des images de référence (16) successives étant espacées d'au moins 0,5 s,
- pour synchroniser la caméra du véhicule afin de détecter l'environnement du véhicule par rapport à l'image de référence (16), et
- pour déterminer et fournir le signal de commande en fonction des données de caméra (18) détectées par rapport à l'image de référence (16).

9. Véhicule automobile comprenant une caméra du véhicule, un projecteur à pixels (10, 12) et un dispositif de commande destiné à commander un projecteur à pixels (10, 12),
**caractérisé en ce que**
le dispositif de commande est configuré selon la revendication 8.
